# EUROPEAN PATENT SPECIFICATION

(11) **EP 2 842 206 B1**
(45) Date of publication and mention of the grant of the patent: **28.03.2018**
(21) Application number: 12728128.5
(22) Date of filing: 24.04.2012
(51) Int. Cl.: H02G 3/04, H02G 5/00

(54) **ADAPTABLE PREFABRICATED LAMINATED BUSBARSYSTEM AND A METHOD FOR A ADAPTING THE LENGTH OF SAID BUSBARSYSTEM**
VORGEFERTIGTES ANPASSBARES LAMINIERTES BUSSCHIENENYSTEM UND VERFAHREN ZUR EINSTELLUNG DER LÄNGE DES BUSSCHIENENSYSTEMS
SYSTÈME DE BARRE OMNIBUS STRATIFIÉ, PRÉFABRIQUÉ ET ADAPTABLE, ET PROCÉDÉ PERMETTANT D'ADAPTER LA LONGUEUR DUDIT SYSTÈME DE BARRE OMNIBUS

(43) Date of publication of application: 04.03.2015
(73) Proprietor: IAM Industrial Asset Management S.r.l., 25039 Travagliato (BS) (IT)
(72) Inventor: REGOSA, Mattia, I-1-25133 Brescia (IT)
(74) Representative: Galassi, Alessandro
(86) International application number: PCT/IT2012/000120
(87) International publication number: WO 2013/160920

(56) References cited:
- EP-A1- 1 079 492
- US-A- 4 735 577
- US-A- 5 854 445

## Description

### Field of the invention

In its most general aspect, the present invention relates to the field of busways, also referred to as busbars, and particularly it relates to a conductive element for forming busways as well as to a method for adapting the length of such a conductive element.

### State of the Art

Busways are power lines extending through the space along specified paths, and they usually consist of straight and angular conductive elements sequentially joined to follow the desired path and laid down with the aid of various auxiliary components.

The created path is used to transfer electric current in general as well as to deliver electric current to users connected thereto through withdrawal branches. Certain conductive elements are also adapted to be connected to one or more branch boxes in order to deliver current.

Each of the conductive elements cooperating for forming these busways usually consists of a casing, also referred to as profiled member, provided with an outwardly open compartment, current conductor rails extending longitudinally in the casing towards the interior of the compartment, and a cover or closing member for the comportment which is secured to the casing generally by welding.

The conductor rails include phase rails, neutral rails and ground rails, the latter rails serving as protective conductors. All the bars are enclosed in an insulating sheath to prevent a direct contact therebetween.

In order to form an electrical path according to the desired pattern, the conductive elements are consecutively joined to each other by means of both an electrical junction and a mechanical junction.

The electrical junction is implemented by means of a joint, also referred to as a block, which includes two side walls and plates intervening therebetween which are isolated from each other and arranged in a pack. The plates are interposed in a comb-like fashion between the splayed ends of the conductor rails of every two consecutive members and then locked at the ends of the rail.

Generally, the electrical joint is associated with an end of each conductive element except for the last of the path, so as to be adapted to be connected to the joint-free end of the rails of another adjacent conductive element.

The electrical connection is completed by a locking bolt passing through the joint and screwed thereto to create a clamping torque in order to ensure a close contact between the conductor rails of the joint.

The mechanical junction is implemented by means of a flange to be connected to the casing and cover of adjacent conductive elements, generally with the use of screws.

A further solution provided in the prior art is described in document EP 1 079 492, which discloses a waterproof and conductive rail element comprising a junction assembly disposed between the ends of two casings and further comprising a waterproof cover removably associated with the two casings and having an access opening engaged by a plug provided with a complementary access opening, wherein water is drained from the upper edge of a casing to the lower edge of the same casing by means of spacers provided with draining channels.

Document US 4 735 577 describes a casing comprising an extruded member made of an insulating material, e.g. plastic, which defines a housing through which a conductive member is passed, said casing being provided with closure plates at the ends thereof and being provided with an upper wall having a plurality of openings for accommodating the respective electrical connections, and further comprising a cover for partially or completely closing the openings provided in the upper wall.

Document US5854445A describes an electric power busway system comprising a bus bar support housing, with the opposite side plates of the housing shaped with troughs to hold the bus bars in their relative positions, preventing the bus bars from moving towards or away from one another and providing the necessary short-circuit protection and bending resistance. Clamping blocks are provided outside the protective busway housing to apply friction on the bus bars within, keeping them from sliding out of the housing assembly.

Document US4735577A describes a multiple electrical outlet strip comprising a housing, extruded from plastic, and an elongated electrically conductive material-receiving interior channels. A plurality of sets of spaced through-extending openings are formed in the housing top surface adjacent the electrically conductive material-receiving interior channels, the openings for receipt of male electrical plug prongs.

Document EP1079492A1 describes a water-resistant busway with a water drainage duct.

The conductive elements of the above-described type are advantageous, however, they are not free from drawbacks, including the main drawback that such conductive elements cannot be adapted in length as needed when a busway is laid down, i.e. in the construction site where it is installed.

In fact, the conductive elements usually have modular lengths which allow the conductive elements to be easily used in the formation of a busway comprising an integer multiple of the length of these conductive elements, while the lay-down of a conductive element having a length smaller than the shortest available module or otherwise not corresponding to the predetermined length of the available modules requires that the conductive element would be made ad-hoc by skilled artisans working outside of and away from the construction site or place where the busway is laid down, for example at the manufacturer of the conductive elements.

Therefore, it results that the manufacturing costs and lead times of an ad-hoc busway are often inconveniently increased and may cause the on-going installation to be stopped since it requires and depends on resources external to the busway-manufacturing construction site in order to have conductive elements of a desired size, and specifically of a desired length which is intermediate to the available modular lengths or smaller than the minimum available length.

### Summary of the invention

An object of the present invention is to remedy the above mentioned drawbacks and disadvantages of the prior art, and particularly to provide a conductive element for busways having a structure such as to allow an easy, extemporaneous adaptation of its length without compromising its functionality and robustness, and a corresponding method for adapting the afore said length.

Essentially, the invention, as defined by claim 1, proposes a conductive element for busways which can be assembled and disassembled and whose length can be changed, specifically decreased, through a series of steps which are advantageously adapted for being implemented at the same construction site where a desired busway is installed, i.e. simultaneously to the lay-down thereof, without requiring skilled artisans or artisans external to said construction site and specialized equipment.

According to the invention, said conductive element comprises a casing formed by at least one profiled member, a plurality of conductor rails accommodated in the casing and having splayed terminals protruding from opposite ends of the casing and at least one grounding member, said conductive element further comprising at least one first connection for removably fastening the at least one grounding member to an end or head of the casing, said at least one first connection extending along the whole length of said casing.

Essentially, the invention provides a conductive element wherein said at least one grounding member is removably placed on at least one end or head of the casing and it can be accessed from the outside in order to be quickly assembled to or disassembled from the casing, due to the afore said at least one first connection extending along the whole length of the casing, therefore allowing the conductive element to be quickly assembled and disassembled.

Preferably, the conductive element according to the invention also comprises at least one second connection associated with said at least one grounding member and intended for coupling one of its ends to an end of another adjacent conductive element through a respective joint cover, also serving to protect the ends of the conductor rails and to be connected to said at least one second connection by suitable means.

Preferably, the conductive element according to the invention also comprises at least one third connection associated with said at least one grounding member and through which the conductive element can be advantageously easily handled and moved, for example when it is mounted vertically, by a suitable means.

Preferably, said at least one first connection is arranged inside the body of the casing, more preferably it is formed integral with a wall of the casing, and advantageously it has a polygonal or circular section which is preferably open.

Preferably, there are provided a plurality of first connections of the above type arranged in positions symmetrical to each other with respect to a vertical or horizontal middle plane of the casing, the first connections being able to be advantageously provided in the form of grooves or throats obtained in the at least one profiled member and/ or in the form of juts protruding inside the profiled member.

Grooves or protrusions with a quadrangular section, particularly with a square or rectangular section, are preferable for the afore said upper wall of the profiled member.

Preferably; the afore said at least one second connection is external to the body of the casing, and more preferably it is extended substantially along the entire height of the casing and therefore along the entire height of the at least one grounding member.

Preferably, the afore said at least one second connection is integral with the at least one grounding member, and advantageously it has a polygonal or circular section which is preferably open.

Advantageously, said at least one grounding member comprises a first plate-like portion for closing the head of the casing, and a second plate-like portion attached to the first plate-like portion and substantially orthogonal thereto which follows the course of the afore said splayed terminals of the conductor rails.

The above two plate-like portions of the at least one grounding member are substantially arranged to form a T in which said at least one second connection is jutting from one of them, preferably from the afore said first plate-like portion.

Preferably, the afore said at least one third connection is external to the body of the casing, and more preferably it is extended substantially along the entire height of the casing and therefore along the entire height of the at least one grounding member.

Preferably, said at least one third connection is formed integral with the at least one grounding member, and more preferably it corresponds to a right-angle folded edge of an end portion of the afore said first plate-like portion.

Actually, the afore said at least one third connection is preferably a sort of hook formed by a free end portion, substantially a lip, of the afore said at least one grounding member.

Further, the conductive element according to the invention preferably includes means for stiffening the afore said at least one grounding member, particularly but not limited to, of the second plate-like portion which is advantageously shaped as a lightning bolt, and contrasting means associated with the second plate-like portion and advantageously adapted for maximizing the contact with the walls of an electrical joint of the type used in the electrical junction of the conductor rails of two adjacent conductive elements.

Preferably, the afore said stiffening means and said contrasting means are formed integral with said at least one grounding member.

According to the invention, the present busway may also comprise two grounding members of the above said type, each associated with a respective end of the afore said casing or both associated with a same end of the casing on opposite sides of the splayed terminals of the conductor rails.

Preferably, the conductive element according to the invention also includes a gasket intervening between the at least one grounding member and the end portion of the casing to which it is removably combined.

Preferably, the conductive element according to the invention also includes a protective enclosure placed around the casing and having a length essentially corresponding to, or greater than, that of the casing by a predetermined, limited amount.

According to the invention, this conductive element made of any modular length, for example a length customary to the relevant field, is suitable to be sized as needed and particularly to be shortened, for example for completing a section of busway, through a series of operations which may be carried out quickly, if necessary, at the same construction site or place where the busway is installed, without compromising any features of functionality, robustness and handling thereof.

For this purpose, the present invention provides a method for adapting the length of a conductive element of the above type, comprising the steps of:
opening at least one head of the conductive element by removing the afore said at least one grounding element from the afore said end of the casing;
removing the afore said conductor rails from the afore said casing;
cutting to size the conductor rails and cutting to size the casing;
forming again the splayed terminals of the conductor rails from the cut side;
inserting the afore said cut to size conductor rails into the afore' said cut to size casing so as to have splayed terminals protruding from opposite ends of the casing;
combine the afore said at least one grounding member to the cut to size casing by means of the afore said fastening means cooperating with the afore said at least one first connection extending inside the casing.

Advantageously, the casing may be cut to size either when the same is assembled or when it is disassembled, in case it consists of more profiled members.

In this second case, the individual members constituting the casing may be disassembled before being cut and then cut to size and re-assembled after being cut to size.

In case of a conductive element having a protective enclosure of the above said type, the casing may also be cut to size either when it is provided with the protective enclosure or after the removal of the protective enclosure from the casing with a separate cutting operation.

Further characteristics and advantages of the present invention will be apparent from the following description of a preferred example of embodiment, given for illustration purposes and without limitation, with reference to the accompanying figures.

### Brief description of the figures

Fig. 1 shows a perspective view of a conductive element for a busway according to an embodiment of the present invention;
Fig. 2 shows a cross-sectional view of the conductive element of Figure 1;
Fig. 3 shows a detail of two conductive elements of the type as shown in Fig. 1 which are joined to each other by means of an electrical junction;

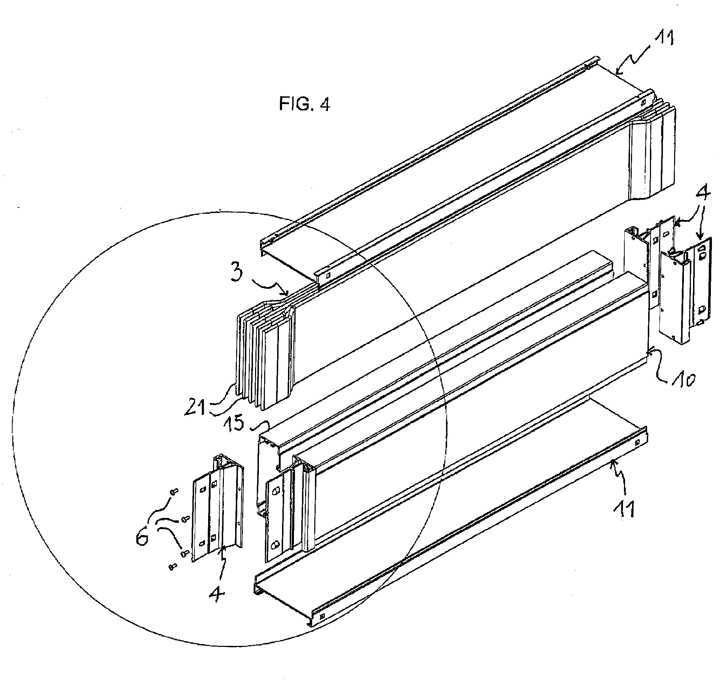

Fig. 4 shows separately the essential components of a conductive element according to the invention to be resized in length;

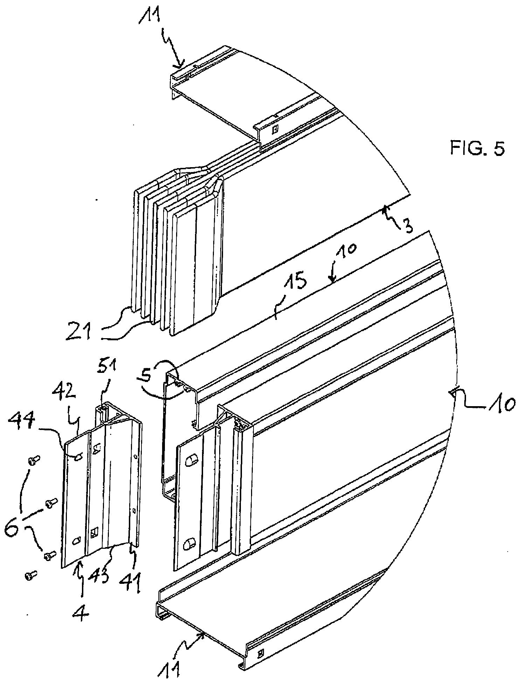

Fig. 5 shows an enlarged detail of the assembly in Fig. 4;
Fig. 6 shows an enlarged detail of a plan view of the conductive element of Figure 1.

### Detailed description

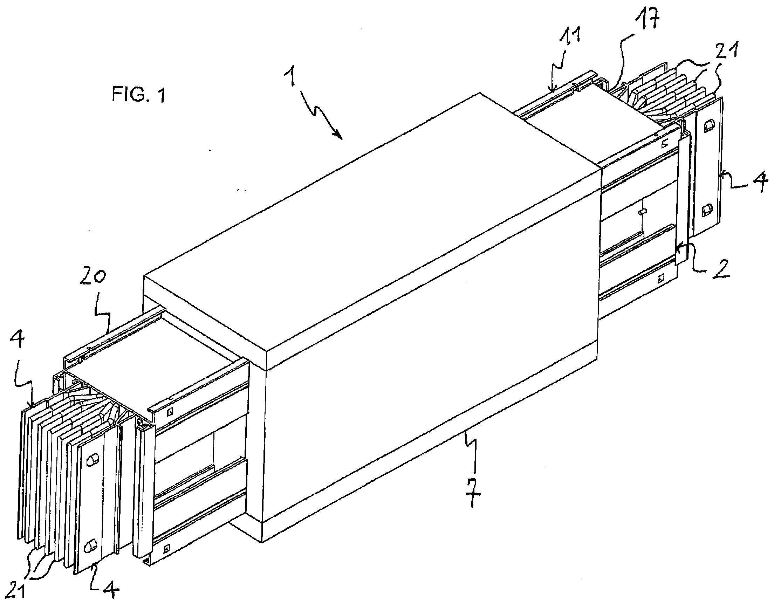

With reference to Figures 1-2, a conductive element adapted for forming busways according to the invention is generally designated by reference numeral 1, and it essentially comprises a casing 2, a plurality of conductor rails 3 accommodated in the casing 2, a plurality of grounding members 4, a plurality of first connections 5 for removably connecting each grounding member 4 to the casing 2 by means of respective combining means 6, and a protective enclosure 7 positioned around the casing 2.

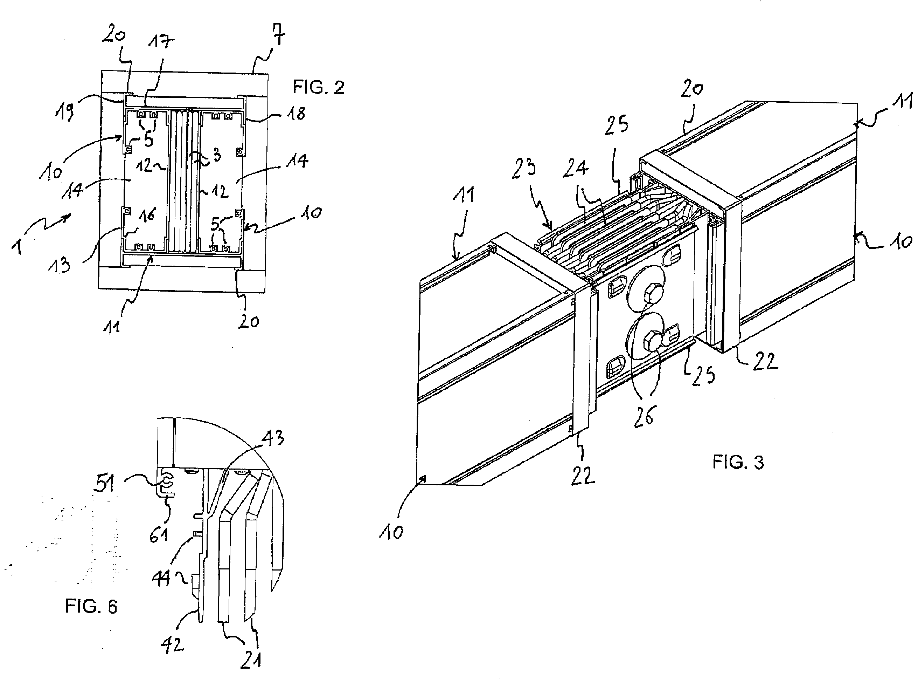

In the example of Fig. 3 there are shown two head portions of two respective conductive elements of the above said type as joined to each other by means of an electrical junction.

Particularly, the casing 2 comprises two profiled members 10 formed by respective box-like bodies disposed at a predetermined distance from each other to form a compartment for accommodating the conductor rails 3, and a pair of auxiliary profiled members 11 arranged opposite to each other with respect to the profiled members 10 and positioned so as to connect said profiled members as well as to close said compartment.

In detail, each profiled member 10 comprises a pair of mutually parallel and opposite side walls 12, 13, one of which is provided with a longitudinally extending opening 14, and a pair of mutually parallel and opposite joining walls 15 extending between the side walls 12, 13.

The opening 14 of each profiled member 10 is extended along the whole length of the casing 2 at a middle position equally spaced from the joining walls 15 and, in both the profiled members 10 of the examples of Figures 1 and 2, it is directed away from the compartment for the conductor rails, however, the openings 14 can be also directed towards the compartment of the casing 2 as defined by the two profiled members 10, as shown in the example of Figure 3.

Furthermore, each side wall 12, 13 of the profiled members 10 comprises opposite end portions defining a step designated by reference numeral 16, each end portion being adjacent to a respective joining wall 15, which joining walls are extended parallel to the opening 14.

With regard to the auxiliary profiled members 11, there is to be added that they are external to the two profiled members 10 and each comprises a central wall 17 and orthogonal end portions protruding from both the sides of the central wall 17.

Particularly, each auxiliary profiled member 11 comprises a pair of first orthogonal members 18 each fitting with a step 16 of a respective profiled member 10, and a pair of second orthogonal members 19 extending away from the first orthogonal members 18 and having respective right-angle folded ends 20.

With regard to the conductor rails 3, there is to be added that they have splayed terminals 21 protruding from opposite ends of the casing 2.

According to a first aspect of the invention, the afore said first connections 5, which are preferably arranged in the casing 2 symmetrically with respect to a middle plane - horizontal or vertical - of the conductive element 1, are extended internal to the box-like body of each profiled member 10 and parallel to the opening 14 along the whole length of the casing 2, as shown in the examples of the Figures, however, said first connections may also be arranged in a different manner.

In the illustrated examples, the first connections 5 are six in number per profiled member and they are adapted for cooperating with combining means 6 to fasten a respective grounding member 4 at opposite end portions of each profiled member 10.

In the examples of the Figures, the first connections 5 are associated internally with the walls of the profiled members 10, and particularly they take the form of juts formed integral with the profiled members having an open circular cross-section, however, their section may also be either a closed circular section or a closed or open polygonal section, and alternatively or in addition to the above, it is possible to provide first connections in the form of grooves or throats provided inside the walls of the profiled members, the latter embodiment not being shown in Figures.

In this regard, if desired, each grounding member 4 can include pre-formed through-holes to be engaged by said combining means, e.g. screws, at positions corresponding to the first connections 5.

According to a further aspect of the invention, in accordance with a preferred embodiment and as illustrated in the examples of the Figures, the conductive element 1 also comprises a plurality of second connections 51, each associated with a corresponding grounding member 4 for mechanically connecting one of its ends to an end of another adjacent conductive element, through a relative joint cover, not shown in the figures, to be fixed by suitable means, e.g. screws, cooperating with the second connections.

Particularly, said joint cover also serves to protect the splayed ends of the conductor rails of two adjacent conductive elements connected to each other by means of an electrical joint of the type illustrated in the example of Figure 3, as will become more evident from the following.

Said second connections 51 are external to the casing body and each is extended substantially orthogonal to the first connections 5 substantially along the entire height of the casing, therefore along the entire height of the respective grounding member 4.

Advantageously, the second connections 51 are made integral with the respective grounding member and, similarly to the first connections 5 according to the examples of the Figures, they have an open circular section, however, they may also provide a different cross-section as set forth above.

Further with regard to the grounding members 4, there is to be added that each of them essentially comprises a first plate-like portion 41 for closing the head of the casing, and a second plate-like portion 42 substantially orthogonal to the first plate-like portion 41 and following the course of the splayed terminals 21 of the conductor rails 3.

Actually, in each grounding member 4, the two first and second plate-like portions are arranged to form a sort of "T" in which the respective second connection is jutting from one of them, and it is advantageously formed integral with the first plate-like portion 41.

According to a further aspect of the invention, in accordance with a preferred embodiment and as illustrated in the examples of the Figures, the conductive element 1 also comprises a plurality of third connections 61, each associated with a respective grounding member 4 for moving the conductive element, particularly for easily handling the conductive element when it is assembled vertically during the formation of a busway.

The afore said third connections are external to the casing body and each is extended substantially orthogonal to the first connections 5 substantially along the entire height of the casing, therefore along the entire height of the respective grounding member.

Advantageously, the third connections 61 are formed integral with the respective grounding member, and advantageously they comprise a right-angle folded edge of an end portion of the relative first plate-like portion.

Furthermore, as illustrated in the Figures, the conductive element according to the invention comprises means 43 for stiffening each grounding member, particularly but not limited to the respective second plate-like portions which are advantageously shaped as a lightning bolt, and contrasting means 44 jutting from the second plate-like portions of each grounding member in order to maximize the contact with the walls of an electrical joint 23, as shown in the example of Figure 3.

In particular, the stiffening means 43 and the contrasting means 44 are formed integral with the respective grounding member and take respectively the form of a bracket extending between intermediate portions of the first and second plate-like portions and ribs, for example obtained by punching, as shown in the example of Figure 6.

Furthermore, the conductive element 1 comprises a gasket 22 peripherally placed between each end of the casing 2 and the respective grounding members 4 associated with the respective profiled members 10.

With regard to the electrical junction between two conductive elements 1, it is formed during the lay-down of the busway by means of the afore said joint 23 which electrically connects the rails of a conductive element to the rails of an adjacent conductive element, as shown in the example of Figure 3.

Particularly, the joint 23 comprises a plurality of plates 24 insulated from each other, arranged in a pack between two side walls 25 and intended for being interposed between the splayed terminals of the conductor rails and crossed by a pair of clamping bolts 26.

The grounding members 4 of the two conductive elements joined by means of the electrical junction are interposed between each side wall 25 and the respective adjacent plate 24, thus causing the conductive element to be grounded as desired.

It should be understood that the casing described above and illustrated in the examples of the Figures is a preferred type, and that the present conductive element according to the invention may comprise a casing formed by one profiled member, and consequently one grounding member per conductive element can also be provided.

According to a further aspect of the invention, the conductive element 1 described above and made of any modular length, is adapted to be resized as needed, particularly to be shortened, through a series of operations which can be carried out quickly, if necessary at the same construction place or site where the busway is installed, as mentioned above.

Particularly, according to the invention, the present conductive element can be resized in length by a method comprising the steps of:
opening a head of the conductive element 1 by removing a grounding member 4 from the casing 2, particularly from the end of one of the profiled members 10, with the removal of the combining means 6 from the first connections 5;
removing the conductor rails 3 from the casing 2;
cutting to size the conductor rails and cutting to size the casing;
forming again the splayed terminals of the cut conductor rails;
inserting the cut to size conductor rails into the cut to size casing so as to have splayed terminals protruding from the opposite ends of the casing;
coupling the previously removed grounding member 4 to the cut to size casing 2 by fastening the combining means 6 to the first connections 5.

Optionally, before the casing 2 is cut to size, it may be removed from the protective enclosure 7 if provided and then cut to size and re-accommodated into the casing which has been also conveniently shortened.

In other words, the protective enclosure 7 may be cut to size separately or simultaneously to the cutting of the casing 2.

Furthermore, if the casing consists of more profiled members, it can be disassembled in order to allow the individual profiled members, i.e. the profiled members 10 and the auxiliary profiled members 11 in the case shown in the illustrated examples, to be cut to size and then reassembled.

The advantages of the present invention, as already evident from the description set forth above, may be summarized in that the invention provides a conductive element for busways which is adapted for being extemporaneously sized in length through a series of operations which may be carried out at the same construction site or place where the busway is installed, without requiring skilled artisans or otherwise artisans external to the construction site and specialized equipment, while preserving all the features of the conductive element and particularly its features of functionality, robustness and handling.

Due to the particular structure of the conductive element comprising at least one grounding member external to the casing and removable therefrom, and at least one connection for the grounding member which is extended along the whole length of the casing, the conductive element can be resized in length simply by cutting to size the casing and the conductor rails, as well as the protective enclosure if needed, and then forming again the original configuration of all the components cooperating for forming the conductive element.

The fact that the method according to the invention can be implemented at the same site where a busway is made, and therefore the availability of conductive elements of the desired intermediate length with respect to the available modular lengths, results in an advantage in terms of manufacturing costs and lead times of the busway.

In preferred embodiments described herein, a further advantage of the present invention is the presence of the second and third connections provided on the one or more grounding members removably constrained to the casing, which allow the cover jointing two conductive elements to be removably coupled and the conductive element to be easily moved and handled when a busway is laid down, particularly for vertical arrangements, and which further allow to preserve these advantages even after the conductive element according to the invention has been resized as desired. One skilled in the art can make various modifications and changes to the conductive element and method for adapting the length thereof as described in the various embodiments set forth above in order to satisfy specific and contingent needs without departing from the scope of the invention as defined by the following claims.

A person skilled of the art will be able to make various changes and variations to the profiled element and method for adapting the length thereof described above in the various illustrated embodiments to satisfy contingent and specific requirements, on the other hand all contained in the protection scope of the invention as defined in the following claims.

## Claims

1. Conductive element (1) for forming busbar-systems, comprising a casing (2) composed of at least one profiled element, a plurality of conductor rails (3) housed in the casing (2) and having splayed terminals (21) protruding from opposite ends of said casing (2) and at least one grounding element (4), **characterized in that** it further comprises:
- at least one first electrical and mechanical connection (5) extending over the whole length of said casing (2), and
- fastening means for the removable coupling of said at least one grounding element (4) with one end of said casing (2) cooperating with said at least one first electrical and mechanical connection (5).

2. Conductive element according to claim 1, further comprising at least one second connection (51) associated with said at least one grounding member for removable coupling with a cover for jointing and protecting said splayed ends (21) of said conductor rails (3).

3. Conductive element according to claim 1 or 2, further comprising at least one third connection (61) associated with said at least one grounding member (4) for vertically moving said conductive element.

4. Conductive element according to any one of the preceding claims, wherein said at least one first electrical and mechanical connection (5) is internal to the body of said casing (2).

5. Conductive element according to any one of the preceding claims, wherein said at least one first electrical and mechanical connection (5) is either a groove or throat formed in said wall of said casing, or an object protruding therefrom and having a polygonal or circular section which is preferably open.

6. Conductive element according to any one of the preceding claims, comprising a plurality of said first electrical and mechanical connections (5) disposed in reciprocally symmetrical positions relatively to a vertical or horizontal median plane of said casing (2).

7. Conductive element according to any one of claims 2-6, wherein said at least one second connection (51) is external to the body of said casing (2) and it is extended substantially along the entire height thereof, said at least one second connection (51) having a polygonal or circular section which is preferably open.

8. Conductive element according to any one of claims 2-7, wherein said at least one grounding member comprises a first plate-like portion (41) for closing said casing (2), and a second plate-like portion (42) attached to said first plate-like portion and following the course of said splayed terminals (21) of said conductor rails (3).

9. Conductive element according to claim 8, wherein said at least one second connection (51) is protruding from said first plate-like portion (41).

10. Conductive element according to any one of claims 3-9, wherein said at least one third connection (61) is external to the body of said casing (2) and it is extended substantially along the entire height thereof.

11. Conductive element according to any one of claims 8-10, wherein said at least one third connection (61) is constituted by a right-angle folded edge of an end portion of said first plate-like portion (41).

12. Conductive element according to any one of the preceding claims, comprising two of said grounding elements (4) coupled with the same end of said casing (2) by portions opposing to said splayed terminals (21) of said conductor rails (3).

13. Method for adapting the length of a conductive element according to any one of the preceding claims, comprising the steps of:
opening at least one head of said conductive element (1) by removing said at least one grounding element (4) from said end of said casing (2);
removing said conductor rails (3) from said casing;
cutting to size said conductor rails (3) and cutting
to size said casing (2);
forming again said splayed terminals (21) from the cut portion of said cut conductor rails;
inserting said cut to size conductor rails in said cut to size casing in order to get splayed terminals protruding from opposite ends of said casing;
fastening said grounding element (4) to said cut to size casing by said removable combining means cooperating with said at least one first electrical and mechanical connection which extends over the whole length of said casing.

14. Method according to claim 13, wherein said casing is disassembled and the individual components are cut to size in length, then assembled again.

## Patentansprüche

1. Leitfähiges Element (1) zum Ausbilden von Sammelschienensystemen, umfassend ein Gehäuse (2), welches aus wenigstens einem profilierten Element aufgebaut ist, eine Mehrzahl von Leiterschienen (3), welche in dem Gehäuse (2) aufgenommen sind und gespreizte Anschlüsse (21) aufweisen, welche von entgegengesetzten Enden des Gehäuses (2) hervorstehen, und wenigstens ein Erdungselement (4), **dadurch gekennzeichnet, dass** es ferner umfasst:
- wenigstens ein erstes elektrisches und mechanisches Verbindungselement (5), welches sich über die gesamte Länge des Gehäuses (2) erstreckt, und
- ein Befestigungsmittel für das lösbare Koppeln des wenigstens einen Erdungselements (4) mit einem Ende des Gehäuses (2), welches mit dem wenigstens einen ersten elektrischen und mechanischen Verbindungselement (5) zusammenwirkt.

2. Leitfähiges Element nach Anspruch 1, ferner umfassend wenigstens ein mit dem wenigstens einen Erdungselement assoziiertes zweites Verbindungselement (51) zum lösbaren Koppeln mit einer Abdeckung, um die gespreizten Enden (21) der Leiterschienen (3) zu verbinden und zu schützen.

3. Leitfähiges Element nach Anspruch 1 oder 2, ferner umfassend wenigstens ein mit dem wenigstens einen Erdungselement (4) assoziiertes drittes Verbindungselement (61) zum vertikalen Bewegen des leitfähigen Elements.

4. Leitfähiges Element nach einem der vorhergehenden Ansprüche, wobei sich das wenigstens eine erste elektrische und mechanische Verbindungselement (5) innerhalb des Körpers des Gehäuses (2) befindet.

5. Leitfähiges Element nach einem der vorhergehenden Ansprüche, wobei das wenigstens eine erste elektrische und mechanische Verbindungselement (5) entweder eine Nut oder eine Verengung, welche in der Wand des Gehäuses ausgebildet ist, oder ein Objekt ist, welches davon hervorsteht und einen polygonalen oder kreisrunden Querschnitt aufweist, welcher vorzugsweise offen ist.

6. Leitfähiges Element nach einem der vorhergehenden Ansprüche, umfassend eine Mehrzahl der ersten elektrischen und mechanischen Verbindungselemente (5), welche in wechselseitigen symmetrischen Positionen relativ zu einer vertikalen oder horizontalen Mittelebene des Gehäuses (2) angeordnet sind.

7. Leitfähiges Element nach einem der Ansprüche 2 bis 6, wobei sich das wenigstens eine zweite Verbindungselement (51) außerhalb des Körpers des Gehäuses (2) befindet und sich im Wesentlichen entlang der gesamten Höhe davon erstreckt, wobei das wenigstens eine zweite Verbindungselement (51) einen polygonalen oder kreisrunden Querschnitt aufweist, welcher vorzugsweise offen ist.

8. Leitfähiges Element nach einem der Ansprüche 2 bis 7, wobei das wenigstens eine Erdungselement einen ersten plattenartigen Abschnitt (41) zum Verschließen des Gehäuses (2) und einen zweiten plattenartigen Abschnitt (42) umfasst, welcher an dem ersten plattenartigen Abschnitt angebracht ist und dem Verlauf der gespreizten Anschlüsse (21) der Leiterschienen (3) folgt.

9. Leitfähiges Element nach Anspruch 8, wobei das wenigstens eine zweite Verbindungselement (51) von dem ersten plattenartigen Abschnitt (41) hervorsteht.

10. Leitfähiges Element nach einem der Ansprüche 3 bis 9, wobei sich das wenigstens eine dritte Verbindungselement (61) außerhalb des Körpers des Gehäuses (2) befindet und sich im Wesentlichen entlang der gesamten Höhe davon erstreckt.

11. Leitfähiges Element nach einem der Ansprüche 8 bis 10, wobei das wenigstens eine dritte Verbindungselement (61) durch einen rechtwinklig gefalteten Rand von einem Endabschnitt des ersten plattenartigen Abschnitts (41) gebildet ist.

12. Leitfähiges Element nach einem der vorhergehenden Ansprüche, umfassend zwei der Erdungselemente (4), welche mit dem gleichen Ende des Gehäuses (2) durch Abschnitte gekoppelt sind, welche den gespreizten Anschlüssen (21) der Leiterschienen (3) gegenüberliegen.

13. Verfahren zum Anpassen der Länge eines leitfähigen Elements nach einem der vorhergehenden Ansprüche, umfassend die Schritte:
Öffnen wenigstens eines Kopfes des leitfähigen Elements (1) durch Entfernen des wenigstens einen Erdungselements (4) von dem Ende des Gehäuses (2);
Entfernen der Leiterschienen (3) von dem Gehäuse;
Zuschneiden der Leiterschienen (3) und Zuschneiden des Gehäuses (2);
erneutes Ausbilden der gespreizten Anschlüsse (21) aus dem geschnittenen Abschnitt der geschnittenen Leiterschienen;
Einsetzen der zugeschnittenen Leiterschienen in das zugeschnittene Gehäuse, um gespreizte Anschlüsse zu erhalten, welche von entgegengesetzten Enden des Gehäuses hervorstehen;
Befestigen des Erdungselements (4) an dem zugeschnittenen Gehäuse durch das abnehmbare Kombinationsmittel, welches mit dem wenigstens einen ersten elektrischen und mechanischen Verbindungselement zusammenwirkt, welches sich über die gesamte Länge des Gehäuses erstreckt.

14. Verfahren nach Anspruch 13, wobei das Gehäuse demontiert wird und die individuellen Komponenten in eine Länge zugeschnitten werden und dann wieder montiert wird.

## Revendications

1. Élément conducteur (1) destiné à former des systèmes de barre omnibus, comprenant un boîtier (2) composé d'au moins un élément profilé, une pluralité de rails conducteurs (3) logés dans le boîtier (2) et présentant des bornes chanfreinées (21) faisant saillie depuis les extrémités opposées dudit boîtier (2) et au moins un élément de mise à la terre (4),
**caractérisé en ce qu'**il comprend en outre :
- au moins une première connexion électrique et mécanique (5) s'étendant sur la longueur entière dudit boîtier (2), et
- un moyen de fixation destiné à l'accouplement amovible dudit élément de mise à la terre (4) à une extrémité dudit boîtier (2) coopérant à l'aide d'au moins une première connexion électrique et mécanique (5).

2. Élément conducteur selon la revendication 1, comprenant en outre au moins une seconde connexion (51) associée audit élément de mise à la terre pour l'accouplement amovible à un élément de recouvrement pour la jonction et la protection desdites extrémités chanfreinées (21) desdits rails conducteurs (3).

3. Élément conducteur selon la revendication 1 ou 2, comprenant en outre au moins une troisième connexion (61) associée audit élément de mise à la terre (4) pour déplacer verticalement ledit élément conducteur.

4. Élément conducteur selon l'une quelconque des revendications précédentes, ladite première connexion électrique et mécanique (5) étant interne au corps dudit boîtier (2).

5. Élément conducteur selon l'une quelconque des revendications précédentes, ladite première connexion électrique et mécanique (5) étant soit une rainure soit une gorge formée dans ladite paroi dudit boîtier, ou un objet faisant saillie depuis celle-ci et présentant une section polygonale ou circulaire qui est préférablement ouverte.

6. Élément conducteur selon l'une quelconque des revendications précédentes, comprenant une pluralité desdites premières connexions électriques et mécaniques (5) disposées en positions symétriques réciproques par rapport à un plan médian vertical ou horizontal dudit boîtier (2).

7. Élément conducteur selon l'une quelconque des revendications 2 à 6, ladite seconde connexion (51) étant externe au corps dudit boîtier (2) et s'étendant sensiblement le long de sa hauteur entière, ladite seconde connexion (51) présentant une section polygonale ou circulaire qui est préférablement ouverte.

8. Élément conducteur selon l'une quelconque des revendications 2 à 7, ledit élément de mise à la terre comprenant une première partie en forme de plaque (41) pour fermer ledit boîtier (2), et une seconde partie en forme de plaque (42) fixée à ladite première partie en forme de plaque et suivant le parcours desdites bornes chanfreinées (21) desdits rails conducteurs (3).

9. Élément conducteur selon la revendication 8, ladite seconde connexion (51) faisant saillie depuis ladite première partie en forme de plaque (41).

10. Élément conducteur selon l'une quelconque des revendications 3 à 9, ladite troisième connexion (61) étant externe au corps dudit boîtier (2) et s'étendant sensiblement le long de sa hauteur entière.

11. Élément conducteur selon l'une quelconque des revendications 8 à 10, ladite troisième connexion (61) étant constituée d'un bord plié à angle droit d'une partie d'extrémité de ladite première partie en forme de plaque (41).

12. Élément conducteur selon l'une quelconque des revendications précédentes, comprenant deux desdits éléments de mise à la terre (4) accouplés à la même extrémité dudit boîtier (2) par des parties opposées auxdites bornes chanfreinées (21) desdits rails conducteurs (3).

13. Procédé d'adaptation de la longueur d'un élément conducteur selon l'une quelconque des revendications précédentes, comprenant les étapes :
d'ouverture d'au moins une tête dudit élément conducteur (1) en retirant ledit élément de mise à la terre (4) de ladite extrémité dudit boîtier (2) ;
d'élimination desdits rails conducteurs (3) dudit boîtier ;
de découpe pour dimensionner lesdits rails conducteurs (3) et de découpe pour dimensionner ledit boîtier (2) ;
de formation à nouveau desdites bornes chanfreinées (21) depuis la partie découpée desdits rails conducteurs découpés ;
d'insertion de ladite découpe pour dimensionner les rails conducteurs dans ladite découpe pour dimensionner le boîtier afin d'obtenir des bornes chanfreinées faisant saillie depuis les extrémités opposées dudit boîtier ;
d'attache dudit élément de mise à la terre (4) à ladite découpe pour dimensionner le boîtier grâce audit moyen de combinaison amovible coopérant avec ladite première connexion électrique et mécanique qui s'étend sur la longueur entière dudit boîtier.

14. Procédé selon la revendication 13, ledit boîtier étant désassemblé et les constituants individuels étant découpés pour le dimensionnement dans la longueur, puis à nouveau assemblé.
